# EUROPÄISCHE PATENTANMELDUNG

(11) **EP 1 793 134 A1**
(43) Veröffentlichungstag der Anmeldung: **06.06.2007**
(21) Anmeldenummer: 06023975.3
(22) Anmeldetag: 18.11.2006
(51) Int. Cl.: F16C 11/04, B21J 15/02, F16B 19/06, E05D 5/12

(54) **Gelenkvorrichtung, bestehend aus zwei relativbeweglichen Elementen**

(30) Priorität: 30.11.2005 DE 102005057010
(71) Anmelder: Magna Car Top Systems GmbH, 74321 Bietigheim-Bissingen (DE)
(72) Erfinder: Krüger, Gerhard, 21033 Hamburg (DE)

(57) **Zusammenfassung**

Dies Gelenkvorrichtung, bestehend aus zwei relativbeweglichen Elementen, vorzugsweise Lenker eines Gestänges ist für ein bewegliches Dach eines Kraftfahrzeugs geeignet, welche erste Lenker und zweite Lenker unter Vermittlung eines Gelenkzapfens zusammenwirken, der erste und zweite Stufenabschnitte mit unterschiedlichen Durchmessern aufweist, wobei der erste Lenker mit dem größeren Durchmesser eine erste mit einer Lagerbuchse versehene Bohrung durchdringt, einen Stützkopf umfasst und mit einem Anschlag sich am zweiten Lenker abstützt, welche Lagerbuchse mit radialen Krägen den ersten Lenker umgreift, wobei der zweite Stufenabschnitt in einer zweiten Bohrung verläuft und in axialer Richtung gesichert ist.

Um diese Gelenkvorrichtung bezüglich Funktion und Herstellung zu verbessern besteht die Lagerbuchse aus Metall, und wenigstens einer ihrer Krägen ist durch Umformen in eine Endlage gebracht und der zweite Stufenabschnitt des Gelenkzapfens ist durch einen die die beiden Lenker verbindenden Nietkopf festgesetzt.

Zur Herstellung der Gelenkvorrichtung wird ein Verfahren vorgeschlagen, das mehrere Schritte umfasst.

## Beschreibung

Die Erfindung betrifft eine Gelenkvorrichtung, bestehend aus zwei relativbeweglichen Elementen, vorzugsweise Lenker eines Gestänges für ein bewegliches Dach eines Kraftfahrzeugs nach dem Oberbegriff des Patentanspruch 1. Darüber hinaus bezieht sich diese Erfindung auf ein Verfahren zum Verbinden der relativbeweglichen Elemente dieser Vorrichtung.

Es ist ein Gelenk zur Lagerung von Hebeln, Schwingen oder dgl. bekannt, DE 40 30 855 C2, das einen Gelenkzapfen und zwei relativbewegliche Lenkerelemente aufweist. Der Gelenkzapfen besitzt einen Stützkopf und einen Bohrungen der Lenkerelemente aufnehmenden Schaft auf, der erste und zweite Stufenabschnitte umfasst. Der erste Stufenabschnitt ist mit einem größeren Durchmesser versehen als der zweite Stufenabschnitt, der auf einer vom Stützkopf abgekehrten Seite mit einem Schließkopf die Verbindung der beiden Lenkerelemente zueinander bewerkstelligt. Der erste Stufenabschnitt mit dem größeren Durchmesser wird von einer Lagerbuchse umgeben, die aus Kunststoff hergestellt ist. Darüber hinaus ist der erste Stufenabschnitt mit einem Anschlag an eines der beiden Lenkerelemente herangeführt.

Die DE 197 23 401 C1 zeigt eine erste und eine zweite Scharnierhälfte, die relativbeweglich zusammengesetzt sind. Eine Bohrung der ersten Scharnierhälfte ist mit einer Kragenbuchse versehen, deren Krägen um äußere Begrenzungen dieser Scharnierhälfte herumgeführt sind. In eine Bohrung der zweiten Scharnierhälfte ist eine zwei Konusse aufweisende Lagerbuchse eingesetzt. An dem der ersten Scharnierhälfte zugekehrten Konus der Lagerbuchse stützt sich eine Zwischenbuchse, wobei auf einer axialen Begrenzung der Lagerbuchse ein benachbarter Kragen der der ersten Scharnierhälfte aufliegt. Beide Scharnierhälften werden mittels eines Scharnierstifts und einer Mutter in Lage gehalten. Der mit einem Kopf versehene Scharnierstift durchdringt die beiden Scharnierhälften, und die Mutter stützt sich mit einem Konus an einem anderen Konus der Lagerbuchse ab.

Es ist Aufgabe der Erfindung eine Gelenkvorrichtung Vorrichtung, besehend aus zwei relativ beweglichen Elementen zu schaffen, die bei einfacher Konstruktion sich durch gute Funktion auszeichnet. Dabei sollte aber auch ein Verfahren zur Herstellung der Gelenkvorrichtung entwickelt werden, das leicht durchführbar und prozesssicher ist.

Nach der Erfindung wird diese Aufgabe vor allem durch die Merkmale der Ansprüche 1 und 16 gelöst. Weitere, die Erfindung ausgestaltende Merkmale sind in den Ansprüchen 2 bis 15 enthalten.

Die mit der Erfindung hauptsächlich erzielten Vorteile sind darin zu sehen, dass die beiden relativbeweglichen Elemente, die Lenker eines Gestänges für ein bewegliches Dach eines Kraftfahrzeugs sein können und die Lenker, der Gelenkzapfen sowie die Lagerbuchse eine ausgezeichnete Gelenkvorrichtung bildet, die sich bei beispielhafter Wirkungsweise und Haltbarkeit aufwandsarm herstellen lässt. Hierzu tragen nicht nur die Krägen der Lagerbuchse und die Stufenabschnitte des Gelenkzapfens, sondern auch der Nietkopf des zuletzt genannten Gelenkzapfens bei. Durch die Rinnen im Übergangsbereich zwischen Stützkopf und erstem Stufenabschnitt bzw. im Übergangsbereich zwischen Anschlage des ersten Stufenabschnitts und dem zweiten Stufenabschnitt wird ein gezielter Toleranzausgleich gewährleistet. Das Verfahren zur Herstellung der Vorrichtung zeichnet sich durch einfache Umsetzbarkeit und hervorzuhebende Prozesssicherheit aus. Schließlich sind die Schritte des Verfahrens mit vertretbarem Einsatz an technischen Mitteln und hohem Automationsgrad realisierbar.

In der Zeichnung werden ein Ausführungsbeispiel einer Gelenkvorrichtung mit zwei relativbeweglichen Elementen und ein Verfahren zur Herstellung der Gelenkvorrichtung gezeigt, welche Gelenkvorrichtung und welches Verfahren nachstehend erläutert werden.

Es zeigen
Fig. 1 einen Querschnitt durch die Gelenkvorrichtung nach der Erfindung,
Fig.2 eine Einzelheit X der Fig. 1 als Schrägansicht und in größerem Maßstab,
Fig. 3 eine Einzelheit Y der Fig. 1 in größerem Maßstab
Fig. 4 einen Teilschnitt der Fig. 1 betreffend einen ersten Schritt des Verfahrens zur Herstellung der Gelenkvorrichtung,
Fig. 5 eine Ansicht entsprechend Fig. 3 betreffend einen zweiten Schritt dieses Verfahrens;
Fig. 6 eine Ansicht entsprechend Fig. 3 betreffend einen dritten Schritt dieses Verfahrens,
Fig. 7 eine Ansicht entsprechend Fig. 3 betreffend einen vierten Schritt dieses Verfahrens,
Fig. 8 eine Ansicht entsprechend Fig. 3 betreffend einen fünften Schritt dieses Verfahrens,
Fig. 9 eine Ansicht entsprechend Fig. 3 betreffend einen sechsten Schritt dieses Verfahrens,
Fig. 10 eine Ansicht entsprechend Fig. 3 betreffend einen siebten Schritt dieses Verfahrens,
Fig. 11 eine Ansicht entsprechend Fig. 3 betreffend einen achten Schritt dieses Verfahrens.

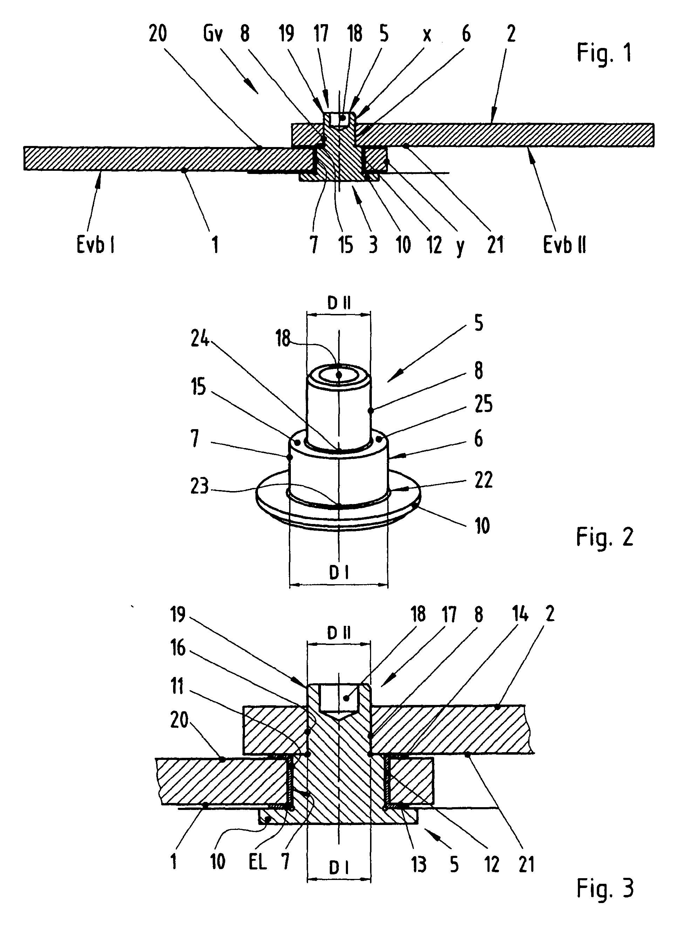

Eine Gelenkvorrichtung Gv wird durch zwei relativbewegliche Elemente Evb I und Evb II gebildet, die als erster Lenker 1 und als zweiter Lenker 2 eines Gestänges für ein nicht dargestelltes von einer Schließstellung in eine Offenstellung und *vice versa* bewegliches Dach eines Kraftfahrzeuges dargestellt und mittels einer Halteeinrichtung 3 miteinander verbunden sind. Die Halteeinrichtung 3 umfasst einen Gelenkzapfen 5, der mit dem ersten Lenker 1 und dem zweiten Lenker 2 zusammenwirkt. Der Gelenkzapfen 5 weist einen Schaft 6 mit einem ersten Stufenabschnitt 7 und einem zweiten Stufenabschnitt 8 auf. Der erste Stufenabschnitt 7 und der zweite Stufenabschnitt 8 sind mit unterschiedlichen Durchmessern DI und DII -Fig. 1 und 2-, wobei der erste Durchmesser DI des ersten Stufenabschnitts 7 größer ist als der zweite Durchmesser DII des zweiten Stufenabschnitts 8.

Der Schaft 6 des Gelenkzapfens 5 ist auf einer Seite 9 des ersten Lenkers 1 mit einem Stützkopf 10 versehen, und der erste Stufenabschnitt 7 mit dem größeren Durchmesser DI durchdringt eine erste Bohrung 11 des ersten Lenkers 1, und zwar unter Zwischenschaltung einer Lagerbuchse 12 , die zu ihrer Axialsicherung mit radialen Krägen 13 und 14 den ersten Lenker 1 umgreift. Zwischen dem ersten Stufenabschnitt 7 und dem zweiten Stufenabschnitt 8 ist ein Anschlag 15 am Schaft 6 vorgesehen, an dem der zweite Lenker 2 anliegt. Darüber hinaus erstreckt sich der zweite Stufenabschnitt 8 mit dem kleineren Durchmesser DII innerhalb einer zweiten Bohrung 16 des zweiten Lenkers 2, welcher zweite Stufenabschnitt 8 auf einer Seite 17 des zweiten Lenkers 2 in axialer Richtung gesichert.

Die Lagerbuchse 12 besteht aus einem geeigneten Metall und wenigstens einer der Krägen 13 oder 14, im Ausführungsbeispiel ist es der Kragen 13, ist durch Umformen in eine Endlage EI gebracht, und die axiale Sicherung wird durch einen mit einer Einbohrung 18 versehenen Nietkopf 19 des ebenfalls aus Metall hergestellten Gelenkzapfens 5 gebildet; durch die Einbohrung 18 wird die gezielte Bildung des Nietkopfs 19 gewährleistet. Die Lenker 1 und 2 bestehen aus metallischem Werkstoff mit abgeflachten Lenkerabschnitten 20 und 21, die übereinander liegen und einen rechteckigen Querschnitt besitzen. Dabei steht der zweite Lenker 2 mit dem Kragen 14 des ersten Lenkers 1 in Berührungskontakt.

In Fig. 2 ist dargestellt, dass in einem ersten Übergangsbereich 22 des Gelenkzapfens 5, und zwar zwischen Stützkopf 10 und erstem Stufenabschnitt 7 eine als Einstich ausgeführte umlaufende erste Rinne 23 angeordnet ist. Eine weitere ähnlich gestaltete zweite Rinne nämlich 24 ist in einem zweiten Übergangsbereich 25 zwischen dem Anschlag 15 und zweitem Stufenabschnitt 8 vorgesehen.

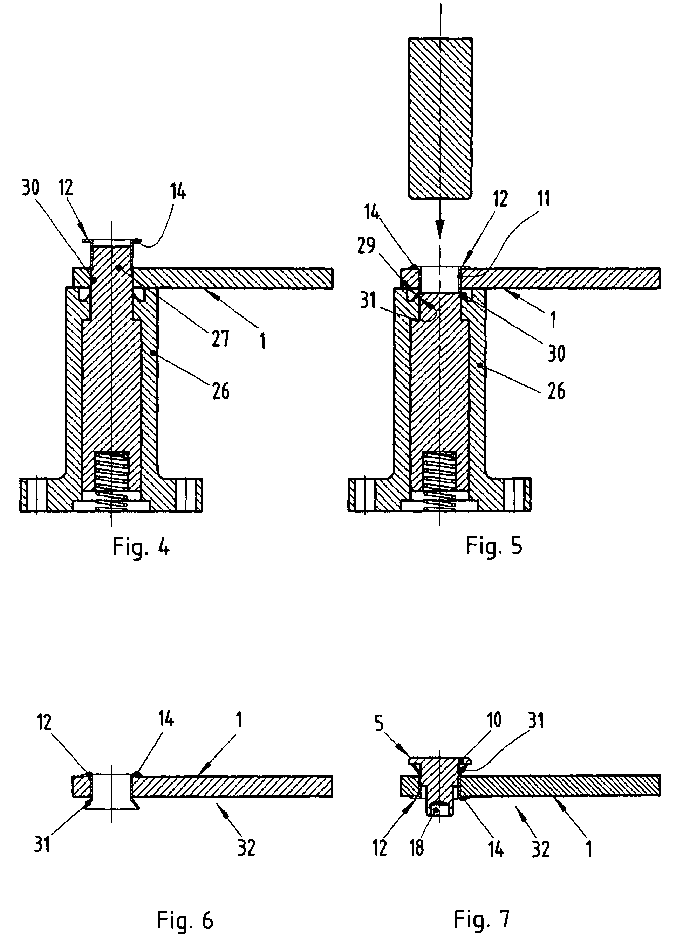

Gemäß den Fig. 4 bis 11 werden die Schritte des Verfahrens zur Herstellung der Gelenkvorrichtung gezeigt, wobei hierzu nachstehend folgendes ausgeführt wird:

Die Fig. 4 -erster Schritt- zeigt den ersten Lenker 1, der auf einer Einpress- und Umbördelvorrichtung 26 angeordnet ist. Dabei liegt die Lagerbuchse 12 oberhalb des ersten Lenkers 1, und ein Bolzen 27 der Einpress- und Umbördelvorrichtung 26 durchdringt den ersten Lenker 1 und abschnittsweise die Lagerbuchse 12.

Nach Fig. 5 -zweiter Schritt- wird die Lagerbuchse 12 mittels eines Stempels 28 der Einpress- und Umbördlevorrichtung 26 in die erste Bohrung 11 des ersten Lenkers 1 hineingepresst, wobei ein aus der Bohrung 11 herausragender Lagerbuchsenabschnitt 29 mittels eines Umformkonus 30 der Einpress- und Umbördelvorrichtung 26 eine Vorbördelung 31 erfährt.

Aus Fig. 6 -dritter Schritt- geht hervor, wie erste Lenker 1 und die Lagerbuchse 12 durch den zweiten Schritt -Fig. 4- zu einer vorgefertigten Baueinheit 32 zusammengefügt sind.

Gemäß Fig. 7 -vierter Schritt- wird der der Gelenkzapfen 5 in vorgefertigtem Zustand in die erste Bohrung 11 bzw. die die Lagerbuchse 12 des ersten Lenkers 1 der Baueinheit 32 eingefügt.

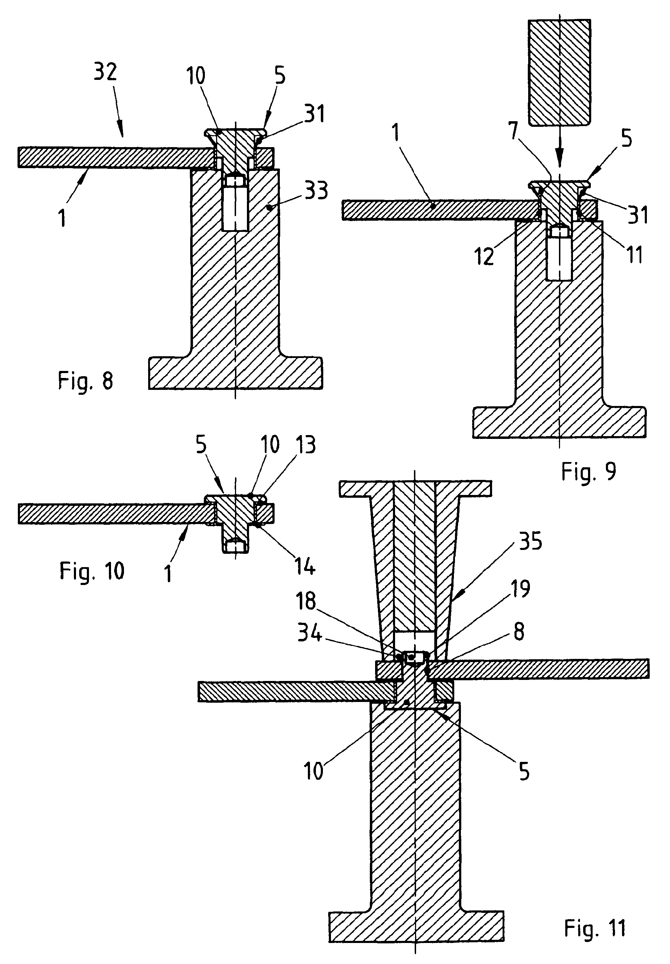

In Fig. 8 -fünfter Schritt- wird die Baueinheit 32 -erster Lenker 1 und Lagerbuchse 12- mit Gelenkzapfen 5 in eine Kalibrieraufnahmevorrichtung 33 eingebracht.

Die Fig. 9 -sechster Schritt- gibt wieder, wie der Gelenkzapfen 5 mit seinem ersten Stufenabschnitt 7 in die erste Bohrung 11 bzw. Lagerbuchse 12 eingepresst wird, und die erste Stufenabschnitt 7 des Gelenkzapfens 5 und die erste Bohrung 11 des ersten Lenkers 1 kalibriert werden, wobei die Vorbördelung 31 durch Umformen in die endgültige den Kragen 13 bildende Umbördelung verbracht wird.

Nach Fig. 10 -siebter Schritt- wird der Stützkopf 10 des Gelenkzapfens 5 in Berührungskontakt mit dem Kragen 10 verbracht.

Schließlich ist in Fig. 11 dargestellt, wie der zweite Stufenabschnitt 8 des Gelenkzapfens 5 in die zweite Bohrung 12 eingeführt wird, wobei ein aus der zweiten Bohrung 12 herausragendes freies Ende 34 des Lagerzapfens 5 mittels einer Nietvorrichtung 35 als Nietkopf 19 ausgebildet wird.

## Patentansprüche

1. Gelenkvorrichtung, bestehend aus zwei relativbeweglichen Elementen, vorzugsweise Lenker eines Gestänges für ein bewegliches Dach eines Kraftfahrzeugs, welche erste und Lenker und zweite Lenker unter Vermittlung eines Gelenkzapfens zusammenwirken, der erste und zweite Stufenabschnitte mit unterschiedlichen Durchmessern aufweist, wobei der erste Lenker mit dem größeren Durchmesser eine erste mit einer Lagerbuchse versehene Bohrung durchdringt, einen Stützkopf umfasst und mit einem Anschlag sich am zweiten Lenker abstützt, welche Lagerbuchse mit radialen Krägen den ersten Lenker umgreift, wobei der zweite Stufenabschnitt in einer zweiten Bohrung verläuft und in axialer Richtung gesichert ist, **dadurch gekennzeichnet, dass** die Lagerbuchse (12) aus Metall besteht und wenigstens einer ihrer Krägen (13 oder 14) durch Umformen in eine Endlage gebracht ist und dass der zweite Stufenabschnitt (8) des Gelenkzapfens (5) durch einen die die beiden Lenker (1 und 2) verbindenden Nietkopf (19) festgesetzt ist.

2. Gelenkvorrichtung nach Anspruch 1, **dadurch gekennzeichnet, dass** der zweite Lenker (2) auf dem letzterem zugekehrten Kragen (14) des ersten Lenkers (1) aufliegt.

3. Gelenkvorrichtung nach Anspruch 1, **dadurch gekennzeichnet, dass** der zweite Stufenabschnitt (8) mit einer zur Bildung des Nietkopfs (19) dienenden Einbohrung (18) versehen ist.

4. Gelenkvorrichtung nach Anspruch 1, **dadurch gekennzeichnet, dass** in einem ersten Übergangsbereich (22) zwischen Stützkopf (10) und erstem Stufenabschnitt (7) eine vorzugsweise erste umlaufend Rinne (23) vorgesehen ist.

5. Gelenkvorrichtung nach Anspruch 1, **dadurch gekennzeichnet, dass** in einem zweiten Übergangsbereich ( zwischen Anschlag des ersten Stufenabschnitt und dem zweiten Stufenabschnitt eine vorzugsweise zweite umlaufende Rinne (24) vorgesehen ist.

6. Gelenkvorrichtung nach Anspruch 1, **dadurch gekennzeichnet, dass** die Lenker (1 und 2) mit abgeflachten Lenkerabschnitten (20 und 21) übereinander liegen.

7. Gelenkvorrichtung nach den Ansprüchen 1 und 6, **dadurch gekennzeichnet, dass** die Lenker (1 und 2) aus metallischem Werkstoff mit rechteckigem Querschnitt bestehen.

8. Verfahren zur Herstellung der Gelenkvorrichtung mit erstem und zweitem Lenker, dem Stufenabschnitte aufweisenden Gelenkzapfen und der Lagerbuchse nach einem oder mehreren der vorangehenden Ansprüche, **dadurch gekennzeichnet, dass** der erste Lenker (1) auf einer Einpress- und Umbördelvorrichtung (26) und die Lagerbuchse (12) im vorgefertigten Zustand über dem ersten Lenker (1) positioniert werden.

9. Verfahren nach Anspruch 8, **dadurch gekennzeichnet, dass** die Lagerbuchse i(12) n die erste Bohrung (11) des ersten Lenkers (1) eingepresst wird, dergestalt, dass die Lagerbuchse (12) mit einem freien Buchsenabschnitt (29) aus der ersten Bohrung (11) heraustritt und eine Vorbördelung aufweist.

10. Verfahren nach Anspruch 9, **dadurch gekennzeichnet, dass** der erste Lenker (1) und die Lagerbuchse (12) zu einer vorgefertigten Baueinheit (32) verarbeitet werden.

11. Verfahren nach den Ansprüchen 8 und 10, **dadurch gekennzeichnet, dass** der Gelenkzapfen (5) in vorgefertigtem Zustand in die erste Bohrung (11) des ersten Lenkers (1) der Baueinheit (32) eingefügt wird.

12. Verfahren nach Anspruch 11, **dadurch gekennzeichnet, dass** die Baueinheit (32) mit Gelenkzapfen (5) in eine Kalibrieraufnahmevorrichtung (33) eingelegt wird.

13. Verfahren nach Ansprüchen 11 und 12, **dadurch gekennzeichnet, dass** der Gelenkzapfen (5) zapfen mit seinem ersten Stufenabschnitt (7) in die erste Bohrung (11) bzw. Lagerbuchse (12) eingepresst wird und die Lagerbuchse (32), der erste Stufenabschnitt (7) des Gelenkzapfens (5) und die erste Bohrung (11) des ersten Lenkers (1) kalibriert werden, wobei die Vorbördelung (31) durch Umformen in eine endgültige den Kragen (14) bildende Umbördelung verbracht wird.

14. Verfahren nach Anspruch 13, **dadurch gekennzeichnet, dass** der Stützkopf (10) des Gelenkzapfens (5) in Kontakt mit dem Kragen (13) verbracht wird.

15. Verfahren nach einem oder mehreren der Ansprüche 8 bis 14, **dadurch gekennzeichnet**, der zweite Stufenabschnitt (8) des Gelenkzapfens (5) in die zweite Bohrung (16) des zweiten Lenkers (2) eingeführt wird, wobei ein aus der zweiten Bohrung (16) herausragendes freies Ende (34) des Gelenkzapfens (5) als Nietkopf (19) ausgebildet wird.

16. Verfahren zur Herstellung der Gelenkvorrichtung mit erstem und zweitem Lenker, dem Stufenabschnitte aufweisenden Gelenkzapfen und der Lagerbuchse nach einem oder mehreren der vorangehenden Ansprüche **gekennzeichnet durch** folgende Verfahrenschritte:
erster Schritt: es werden der erste Lenker (1) auf einer Einpress- und Umbördelvorrichtung (26) und die Lagerbuchse (12) im vorgefertigten Zustand über dem ersten Lenker (2) positioniert,
zweiter Schritt: die Lagerbuchse (12) wird in die erste Bohrung (11) des ersten Lenkers (1) eingepresst, dergestalt dass die Lagerbuchse (12) mit einem freien Lagerbuchsenabschnitt (29) aus der ersten Bohrung (11) heraustritt und eine Vorbördelung (31) aufweist,
dritter Schritt: der erste Lenker (1) und die Lagerbuchse (12) werden zu einer vorgefertigten Baueinheit (32) zusammengefügt,
vierter Schritt: der Gelenkzapfen (5) wird in vorgefertigtem Zustand in die erste Bohrung (11) des ersten Lenkers (1) der Baueinheit (32) eingefügt,
fünfter Schritt: die Baueinheit (32) wird mit Gelenkzapfen (5) in eine Kalibrieraufnahmevorrichtung (33) eingelegt,
sechster Schritt: der Gelenkzapfen (5) wird mit seinem ersten Stufenabschnitt (7) in die erste Bohrung (11) bzw. Lagerbuchse (12) eingepresst, und die Lagerbuchse (12), der erste Stufenabschnitt (7) des Gelenkzapfens (5) und die erste Bohrung (11) des ersten Lenkers (1) werden kalibriert, wobei die Vorbördelung (31) **durch** Umformen in eine endgültige den Kragen (13) bildende Umbördelung verbracht wird,
siebter Schritt: der Stützkopf (10) des Gelenkzapfens (5) wird in Kontakt mit dem Kragen (13) verbracht wird,
achter Schritt: der zweite Stufenabschnitt (8) des Gelenkzapfens (5) wird in die zweite Bohrung (16) des zweiten Lenkers (2) eingeführt, wobei ein aus der zweiten Bohrung (16) herausragendes freies Ende (34) des Gelenkzapfens (5) als Nietkopf (19) ausgebildet wird.
